Europäisches Patentamt

European Patent Office

Office européen des brevets

(19)

(11) Veröffentlichungsnummer : **0 158 341**
**B1**

(12) **EUROPÄISCHE PATENTSCHRIFT**

(45) Veröffentlichungstag der Patentschrift :
06.07.88

(51) Int. Cl.⁴ : **B 29 C 57/00, B 29 C 31/00**

(21) Anmeldenummer : 85104347.1

(22) Anmeldetag : 10.04.85

(54) Kontinuierlich arbeitende Vorrichtung zum Formen eines Endes von aus thermoplastischem Kunststoff extrudierten Rohrabschnitten.

(30) Priorität : 10.04.84 DE 3413532

(43) Veröffentlichungstag der Anmeldung :
16.10.85 Patentblatt 85/42

(45) Bekanntmachung des Hinweises auf die Patenterteilung : 06.07.88 Patentblatt 88/27

(84) Benannte Vertragsstaaten :
AT BE CH DE FR GB IT LI LU NL SE

(56) Entgegenhaltungen :
DE-A- 2 855 298
FR-A- 1 192 934
GB-A- 1 276 337
GB-A- 2 022 501
US-A- 3 300 559
US-A- 3 493 998
US-A- 3 641 884
US-A- 4 035 463
US-A- 4 302 174
US-A- 4 404 159

(73) Patentinhaber : Gehr-Kunststoffwerk KG
Casterfeldstrasse 166-172
D-6800 Mannheim 81/Rheinau (DE)

(72) Erfinder : Scharfenberg, Günter
Nikolaus-Dopp-Strasse 14
D-6805 Heddesheim (DE)

(74) Vertreter : Ruschke, Hans Edvard et al
Patentanwälte Dipl.-Ing. Olaf Ruschke Dipl.-Ing. Hans
E. Ruschke Dipl.-Ing. Jürgen Rost Dipl.-Chem. Dr. U.
Rotter Pienzenauerstrasse 2
D-8000 München 80 (DE)

**Beschreibung**

Die vorliegende Erfindung betrifft eine Vorrichtung zum Formen des einen Endes von extrudierten Rohrabschnitten oder Hülsen aus thermoplastischem Kunststoff.

Extrudierte Rohrabschnitte aus thermoplastischem Kunststoff können unter Ausnutzung von Wärme und Druck umgeformt werden, um beispielsweise Schäfte für die Herstellung von Schreibgeräten wie Filzschreiber, Kugelschreiber, Druckbleistifte, aber auch für Pipetten, Zahnpastaspender etc. zu fertigen. Eine grundsätzliche Möglichkeit zur Herstellung derartiger Werkstücke besteht darin, daß ein Dorn oder Kern in den umzuformenden extrudierten Rohrabschnitt eingefahren und dieser gleichzeitig mit einem Ende in ein Formwerkzeug eingeschoben wird, wobei dem Werkstück unter Einwirkung von Wärme und Druck die gewünschte Form erteilt wird.

In der DE-OS 18 08 037 ist eine gattungsgemäße Maschine zur Formung von Muffenenden an thermoplastischen Kunststoffrohren beschrieben; sie besteht aus einem umlaufenden Werkstückträger der aus mit Ausnehmungen versehenen Scheiben gebildet ist. Die Scheiben sind auf einer Welle befestigt, die in Seitenteilen gelagert und angetrieben wird. Heizeinrichtungen zum Erwärmen der Kunststoffrohrenden sowie Formwerkzeuge zum Anformen der Rohrenden sind parallel zur Antriebswelle verschiebbar in der Maschine angeordnet. Die Heizvorrichtungen können an Revolverrädern umlaufen, wobei entweder die ganzen Revolverräder oder die einzelnen Heizvorrichtungen an den Revolverrädern axial verschiebbar sein können. Diese Maschine arbeitet intermittierend, was vor allem durch die voneinander unabhängigen Heiz- und bedingt ist.

In der DE-AS 17 04 124 ist ein Verfahren und eine Vorrichtung zum Anformen eines Bodens am Ende eines thermoplastischen Kunststoffrohres beschrieben und dargestellt. Die Vorrichtung besteht aus einem das Rohr tragenden bzw. aufnehmenden Dorn und einer ersten Vorform- und einer zweiten Fertigform-Matrize. Matrizen und Dorn sind relativ zueinander axial beweglich. Zum Anformen des Bodens wird ein über den Dorn herausragendes Ende des Rohres erwärmt und in diesem verformbaren Zustand in die Vorformmatrize gedrückt. Sodann wird das vorgeformte Rohrende unter hohem Preßdruck in die Fertigform-Matrize gedrückt und dabei gekühlt. Die Matrize der Vorform ist ebenfalls kühlbar, sie besitzt einen Kühlkanal. Die Kühlung dient hier zur Vermeidung des Anschmelzens des Formteiles am Formwerkzeug.

Aus der DE-OS 27 13 499 ist eine kontinuierlich arbeitende Vorrichtung ersichtlich; diese Vorrichtung dient jedoch lediglich dazu, Enden von Kunststoffborsten zu runden. Formwerkzeuge kommen hier nicht zur Anwendung. Hierbei werden stäbchenförmige Kunststoffabschnitte, mittels einer mit einer Rutsche versehenen Auflegeschute in halbkreisförmige Ausnehmungen in der Mantelfläche eines zylindrischen Werkstückträgers gelegt.

In der DE-PS 927 063 ist eine Vorrichtung zum Anstauchen von Rohrenden beschrieben und z. T. dargestellt; sie zeigt einen Stauchdorn mit einer als Formwerkzeug dienenden (Stauch-) Hülse. Das anzustauchende Rohr ist in einem Gesenk gehalten, wobei das vordere Rohrende in einer Ausnehmung der Matrize freiliegt. Beim Stauchvorgang fährt der Dorn in das Rohrende, wobei die Hülse über das Rohr greift. Dorn und Hülse sind relativ zueinander beweglich. Kommt die Hülse zum Anschlag mit dem Gesenk, so wird bei fortschreitender Bewegung des Dornes das Material des Rohrendes zwischen Hülse und Dorn gepreßt.

Hiernach wird es als die der Anmeldung und Erfindung zugrunde liegende Aufgabe angesehen, das Anformen von aus thermoplastischem Kunststoff gebildeten Röhrchen-Enden zu automatisieren, wobei eine in der Zeiteinheit hohe Stückzahl erreicht werden soll. Hierbei bedient sich der Erfinder zwar zum Teil des bekannten Standes der Technik, so wie dieser vorbeschrieben wurde. Damit aber eine kontinuierliche Produktion gewährleistet werden kann, welche für eine hohe Stückzahlrate erforderlich ist, wird in der Anmeldung zusätzlich und erfindungsgemäß vorgeschlagen,

a) die den Werkstückträger aufnehmende und antreibende Welle kontinuierlich anzutreiben, und

b) einerseits vom Werkstückträger mit diesem umlaufende, parallel zu seiner Drehachse verschiebbare, in die Röhrchen eingreifende Dorne, sowie

c) andererseits vom Werkstückträger mit diesem umlaufende, parallel zu seiner Drehachse verschiebbare, jeweils mit einer Heizung verbindbare Formwerkzeuge anzuordnen.

Durch die Erfindung wird insbesondere eine zeitsparende kontinuierliche Produktion derart umgeformter Kunststoffrohrabschnitte ermöglicht, da durch die besondere konstruktive Ausbildung der Vorrichtung eine rasch aufeinanderfolgende Erhitzung und Druckaufbringung mit nachfolgendem Halten und Abkühlen ermöglicht wird, wie dies noch näher beschrieben wird.

Kernstück der erfindungsgemäßen Vorrichtung ist ein auf einer kontinuierlich angetriebenen zentralen Welle vorgesehener scheibenförmiger Werkstückträger, an dessen zylindrischem Umfang eine Anzahl von in Richtung der Welle verlaufenden, einen halbkreisförmigen Querschnitt aufweisenden Ausnehmungen oder Nuten vorgesehen ist zur Aufnahme einzelner Werkstücke, z. B. hier Kunststoffrohrabschnitte. Jeder derartigen Nut (Bearbeitungsstation) sind axial darauf ausgerichtete Bearbeitungswerkzeuge zugeordnet, d. h. auf der einen Seite des scheibenförmigen Werkstückträgers ein axial in Richtung auf das Werkstück verfahrbarer Kern oder Dorn und auf der anderen Seite ein ebenfalls in Richtung auf das Werkstück axial verfahrbares Umformwerkzeug (Nest) mit einem zugeordneten Heizkörper, der seinerseits von dem Nest axial wegfahrbar ist, um letzteres unmittelbar der Wirkung von Kühlwasser aussetzen zu können.

Eine Ausführungsform der Vorrichtung wird im nachfolgenden unter Bezugnahme auf die beigefügten Zeichnungen beschrieben. In diesen ist

Fig. 1 eine prinzipielle Darstellung der erfindungsgemäßen Vorrichtung ;

Fig. 2 eine Seitenansicht des scheibenförmigen Werkstückträgers ;

Fig. 3 eine Darstellung verschiedener Phasen bei der Bearbeitung des Werkstücks ;

Fig. 4 eine vergrößerte Ansicht der Situation gemäß Fig. 3/3 ; und

Fig. 5 ein Schaubild zur Darstellung der einzelnen Arbeitsschritte im Verhältnis zum Drehwinkel der Vorrichtung.

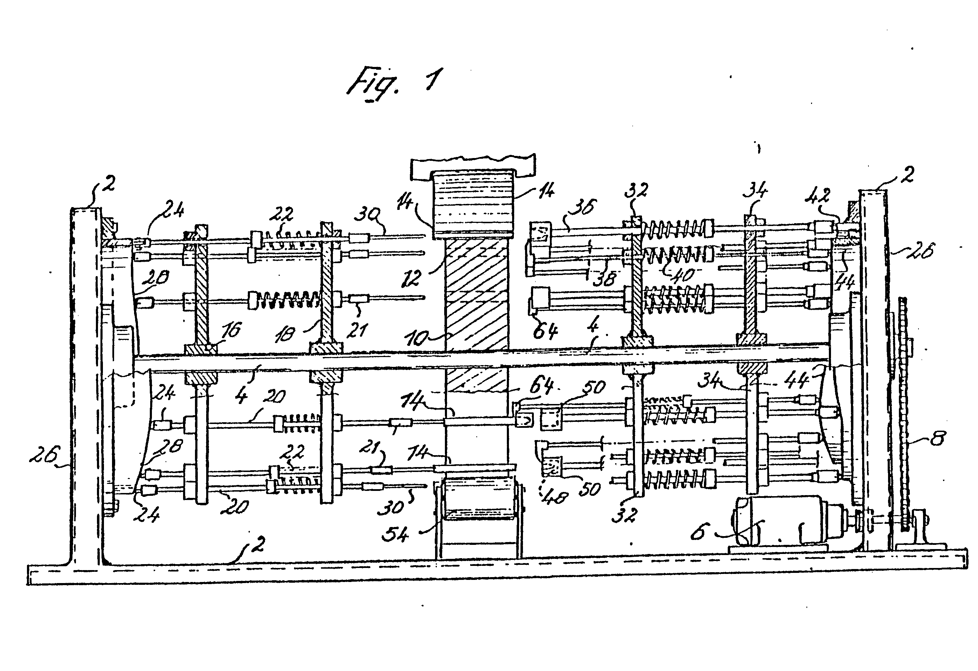

Fig. 1 zeigt in prinzipieller Darstellung eine in einem Rahmen oder Gestell 2 gelagerte zentrale Welle 4, die über einen Elektromotor 6 mittels eines Kettentriebes 8 kontinuierlich angetrieben wird — beispielsweise mit einer Drehzahl von ca. 2 U/min. Ungefähr auf der halben Länge dieser Welle 4 ist ein scheibenförmiger Werkstückträger 10 vorgesehen, der an seinem zylindrischen Außenumfang eine Reihe von in Richtung der Welle verlaufenden, einen etwa halbkreisförmigen Querschnitt aufweisende Ausnehmungen 12 oder Nuten besitzt, die zur Aufnahme einzelner zu bearbeitender Kunststoffrohrabschnitte 14 vorgesehen sind. Beispielsweise können auf dem Umfang verteilt 16 derartige Ausnehmungen zur Aufnahme der einzelnen Werkstücke vorgesehen sein. Im Nachfolgenden werden diese Ausnehmungen 12 als Bearbeitungsstationen bezeichnet.

Auf der in Figur 1 linken Seite des scheibenförmigen Werkstückträgers sind auf der zentralen Welle mit Abstand zu-einander zwei mit der zentralen Achse starr verbundene Scheiben 16, 18 vorgesehen, die zur achsparallelen Führung von kurvenbahngesteuerten Schubstangen 20 dienen, welche auf die einzelnen Bearbeitungsstationen 12 in dem scheibenförmigen Werkstückträger 10 axial ausgerichtet sind. Diese Schubstangen sind durch Federn 22 in einer Richtung von dem scheibenförmigen Werkstückträger weg beaufschlagt und werden entgegen dieser Federkraft verschoben indem an dem von dem scheibenförmigen Werkstückträger abgewandten Ende der einzelnen Schubstangen Rollen 24 vorgesehen sind, die auf einer am Seitenteil 26 des Rahmens der Vorrichtung angeordneten kreisförmigen Kurvenbahn 28 mit in Axialrichtung der zentralen Welle 4 variabler Höhe abrollen. Am entgegengesetzten Ende der Schubstangen 20, d. h. an dem dem Werkstückträger zugewandten Ende, ist jeweils ein Dorn oder Kern 30 vorgesehen, der in die Werkstücke (d. h. die Kunststoffrohrabschnitte) eingefahren werden kann.

Auf der in Figur 1 rechten Seite des scheibenförmigen Werkstückträgers sind ebenfalls zwei Führungsscheiben 32, 34 mit Abstand zueinander starr auf der zentralen Welle 4 angeordnet. Diese Führungsscheiben dienen ähnlich wie die zuvor beschriebenen zur achsparallelen Führung von zwei Gruppen von Schubstangen 36, 38, die konzentrisch zur zentralen Achse 4 angeordnet und vom Werkstückträger weg durch Federn 40 beaufschlagt sind. Jeder einzelnen Bearbeitungsstation 12 (in Fig. 1 auf der rechten Seite) sind zwei Schubstangen 36, 38 zugeordnet, d. h. im konkreten Ausführungsbeispiel insgesamt 16 innere und 16 äußere Schubstangen, die wiederum jeweils durch Kurvenbahnen 42, 44 gesteuert sind. Die einer bestimmten Bearbeitungsstation zugeordnete innere Schubstange 38 besitzt an dem dem scheibenförmigen Werkstückträger zugewandten Ende einen Ausleger 64, an dem das Formwerkzeug oder Nest 48 derart angeordnet ist, daß es auf die zugehörige Bearbeitungsstation axial ausgerichtet ist. Die entsprechende äußere Schubstange 36 ist an ihrem dem scheibenförmigen Werkstückträger zugewandten Seite mit einem Heizkörper 50 versehen, der das Nest 48 dicht passend umgreifen kann, damit ein guter Wärmeübergang vom Heizkörper zum Nest bzw. Formwerkzeug 48 möglich wird.

Durch die über 360° verteilte variable Höhe (in Richtung der Welle 4) der kreisförmigen Kurvenbahnen 42, 44, die den inneren bzw. den äußeren Schubstangen 36, 38 zugeordnert sind, werden letztere in einer noch zu beschreibenden zeitlichen Abfolge in Axialrichtung hin- und herbewegt, um die Kunststoffrohrabschnitte 14 im Zusammenwirken zwischen den jeweiligen Formwerkzeugen 48 und Kernen 30 in der gewünschten Weise umzuformen.

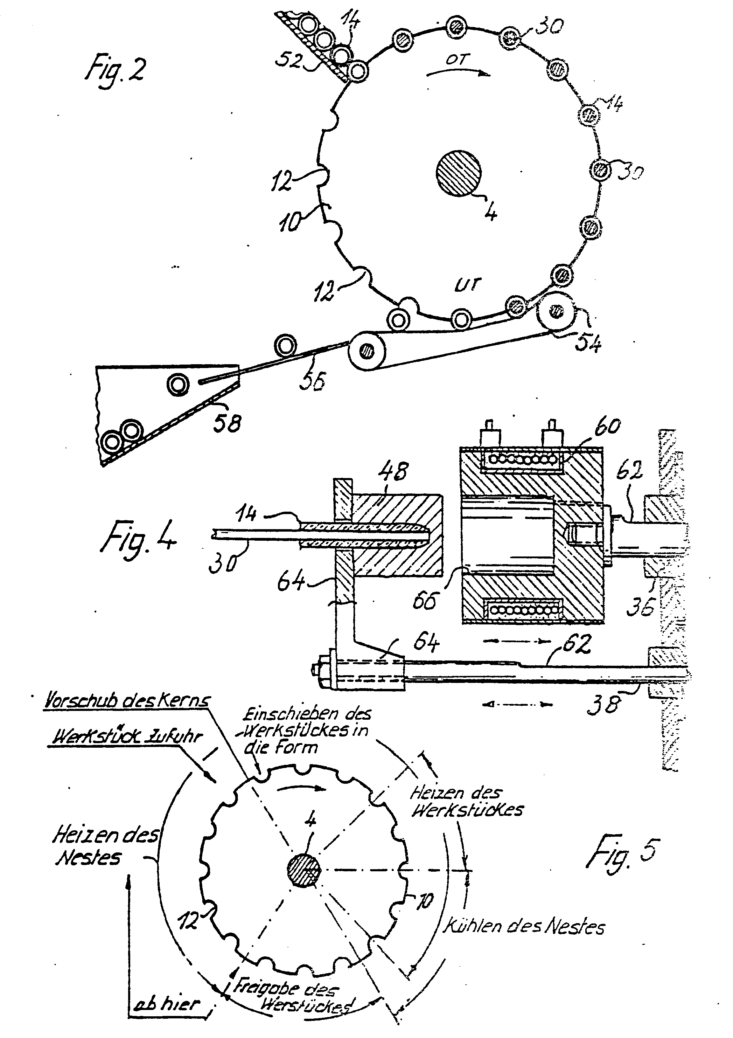

In Figur 2 ist der scheibenförmige Werkstückträger 10 in einer Ansicht von rechts (in Figur 1) gezeigt, wobei die Drehrichtung durch den Pfeil in Uhrzeigerrichtung angedeutet ist. Die zu bearbeitenden Kunststoffrohrabschnitte 14 werden von einer nicht näher dargestellten Vereinzelungsvorrichtung über eine in etwa radial verlaufende Rutsche 52 in achsparalleler Ausrichtung zur Welle 4 an den zylindrischen Umfang des scheibenförmigen Werkstückträgers herangeführt, wo der jeweils vorderste Rohrabschnitt in eine Bearbeitungsstation in Gestalt der nutenförmigen Ausnehmung 12 einfällt. Da die genannte Rutsche etwa 30° bis 45° vor dem oberen Totpunkt (OT) des sich kontinuierlich in Uhrzeigerrichtung drehenden Werkstückträgers angeordnet ist, bleibt jeder Kunststoffrohrabschnitt zunächst infolge der Schwerkraft in der nutenförmigen Ausnehmung jeder Bearbeitungsstation liegen. Kurz nach dem Aufbringen eines Rohrabschnittes auf den Werkstückträger, d. h. etwa 20° vor dem oberen Totpunkt (in Figur 2) beginnt der zur jeweiligen Bearbeitungsstation gehörige Kern 30 aufgrund der Form der Kurvenbahn 28 in den Kunststoffrohrabschnitt einzufahren und verschiebt diesen im Verlauf dieser Bewegung in Richtung auf das aufnahmebereite Nest 48, welches bereits von dem Heizkörper 50 vorgewärmt wurde. Der Kern besitzt gerade die Länge der fertig bearbeiteten Kunststoffhülse und schließt gegenüber der zugehörigen Schubstange 20 durch einen Bund 21 ab, der sich beim Einfahren des Kernes in den Rohrabschnitt an dem einen Ende anlegt.

Figur 3 zeigt fünf verschiedene Arbeitsstellungen 3/1 bis 3/5 der vorgenannten Werkzeuge, und zwar in der Reihenfolge der Arbeitsschritte zur Formung des Werkstückes. Figur 3/1 zeigt die relative Stellung der genannten Werkzeuge beim Aufbringen des Werkstückes auf den Werkstückträger ; dies ist die Ausgangsstellung. Figur 3/2 zeigt die relative Stellung des Kernes 30, des Werkstückträgers 10, des Nestes 48 und des Heizkörpers 50 in ihrer Arbeitsstellung. Der Kern 30 ist so weit vorgeschoben, daß er mit dem Werkstück 14 in das Nest 48 eingefahren ist ; der vordere Teil des Werkstückes wird hier unter Druck- und Wärmeeinwirkung umgeformt.

Gemäß Fig. 3/3 wird nach Erreichen eines Drehwinkels von etwa 90° (in Figur 2 vom oberen Totpunkt an berechnet) der Heizkörper vom Nest (Formwerkzeug) abgezogen, wobei der Heizkörper durch die äußere Kurvenbahn 42 gesteuert zurückgefahren wird, damit das Nest freigelegt wird, das dann mit Kühlwasser besprüht wird. In dieser Phase der Bearbeitung ist die Relativstellung von Kern bzw. Dorn und Nest im Verhältnis zum Werkstückträger unverändert gegenüber Fig. 3/2. Diese Phase der Bearbeitung des Kunststoffrohres dient dem « Halten », d. h. der Druckaufbringung und dem Abkühlen des zuvor erwärmten thermoplastischen Kunststoffmaterials, damit dieses wieder in einen festen Aggregatzustand übergeht. Dieses « Halten » dauert so lange an, bis die betrachtete Bearbeitungsstation mit dem darin festgehaltenen Werkstück 14 in den Bereich des Förderbandes 54 kommt, welches in Figur 2 im unteren Bereich des scheibenförmigen Werkstückträgers (beiderseits des unteren Totpunkts UT) angeordnet ist. Dieses Förderband liegt mit seinem oberen Trum am Werkstückträger bzw. an den Werkstücken an und dient dazu, die fertig bearbeiteten Werkstücke zwischen dem Werkstückträger und dem Förderband einzuklemmen bzw. festzuhalten, damit der Kern/Dorn und das Nest von dem fertig bearbeiteten Werkstück weggefahren werden können, damit letzteres freigelegt wird — man vergleiche Figur 3/4. Das Werkstück wird also zwischen dem zylindrischen Werkstückträger und dem Förderband 54 eingeklemmt und das Nest und der Kern fahren vom Werkstück weg. Am Ende des Förderbandes fällt das fertige Werkstück aufgrund der Schwerkraft nach unten über eine Rutsche 56 in einen einfachen Sammelbehälter 58, der von Zeit zu Zeit entleert werden muß.

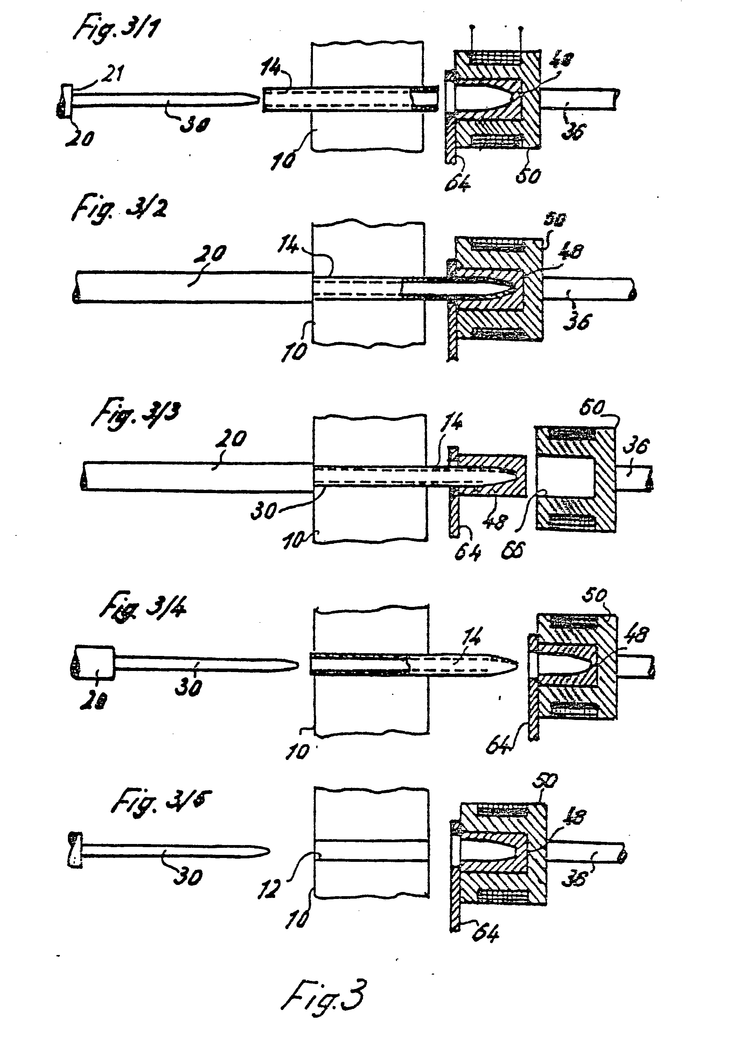

Unmittelbar im Anschluß an (in Drehrichtung des Werkstückträgers gesehen) die Förderbandanordnung beginnen das Nest 48 und der Heizkörper 50 durch die von den Kurvenbahnen 42, 44 gesteuerten Schubstangen veranlaßt wieder in Richtung auf den Werkstückträger 10 vorzufahren, um die Ausgangsstellung in der Nähe des Werkstückträgers einzunehmen und damit für den nächsten Bearbeitungszyklus vorbereitet zu sein. Dieser Zustand ist in Figur 3/5 dargestellt. Nach Erreichen der Rutsche 52 der Vereinzelungsvorrichtung beginnt der dargestellte Bearbeitungszyklus von neuem.

Um die rasche Temperaturänderung des Formwerkzeuges/Nestes sicherzustellen und damit eine zeitsparende Produktion erreichen zu können, ist der Heizkörper unabhängig von dem Nest in Axialrichtung verfahrbar. Wie in Figur 3/3 dargestellt, wird das Nest während des Bearbeitungszyklusses kurzzeitig freigelegt, so daß unter Anwendung von Kühlwasser eine rasche Temperaturänderung des Nestes und damit des Werkstückes erreicht werden kann. Sobald dadurch eine ausreichende Abkühlung und damit Verfestigung des thermoplastischen Kunststoffes erreicht worden ist, wird das dann abgekühlte Nest in die entsprechende Ausnehmung 66 im bereits axial weggefahrenen Heizkörper zurückgefahren, so daß das Nest wieder erwärmt werden kann (wie in Fig. 3/4 dargestellt), um das Nest allmählich wieder auf die notwendige Umformtemperatur für den nächsten Bearbeitungszyklus zu bringen.

In Figur 2 betrachtet können die schubstangengesteuerten Axialbewegungen von Kern, Formwerkzeug bzw. Heizkörper etwa wie folgt beschrieben werden. Dabei bedeutet « nach vorn » in Richtung auf den Werkstückträger, während « nach hinten » bzw. « zurück » von dem Werkstückträger weg bedeutet.

Der Kern 30 beginnt etwa 20° bis 30° vor dem oberen Totpunkt (Figur 2) in das in den Werkstückträger eingebrachte Werkstück einzufahren und hat etwa 45° nach dem oberen Totpunkt die vorderste Lage erreicht, die z. B. in Figur 3/2 dargestellt ist. Durch den Bund 21 am Kern 30 wird dabei gleichzeitig das Werkstück in das von dem Heizkörper erwärmte Nest eingepreßt. Der Kern bleibt in dieser Stellung bis ca. 160° ab dem oberen Totpunkt, also bis nach Erreichen, des Förderbandes 54, fährt anschließend in die ganz zurückgezogene Ausgangslage zurück und bleibt in dieser Stellung bis etwa 340°, d. h. ca. 20° vor dem oberen Totpunkt.

Jedes Formwerkzeug befindet sich ab einer Drehstellung kurz nach Vorbeifahren am Förderband 54 (bei ca. 210° ab oberem Totpunkt) bis kurz nach Passieren des Beginns der Förderbandanordnung in der vordersten Stellung unmittelbar an dem Werkstückträger 10. Nur im Bereich des Förderbandes ist das Nest in der zurückgefahrenen Stellung, wie dies in Fig. 3/4 dargestellt ist. Diese Stellung des Nestes ist erforderlich, um das fertig bearbeitete Werkstück freizugeben und es am Ende der Förderbandanordnung aus dem Werkstückträger frei herausfallen zu lassen.

Die vorzugsweise mittels elektrischer Widerstände 60 ständig beheizten Heizkörper 50 sind während des größten Teils einer Umdrehung des Werkstückträgers in unmittelbarem Kontakt mit dem Nest, um dieses aufzuwärmen bzw. auf der notwendigen Umformtemperatur zu halten. Nur im Bereich ab etwa 90° vom oberen Totpunkt, wo die Kühlung des Nestes mit Kühlwasser beginnt, bis etwa 180° vom oberen Totpunkt sind Heizkör-

per und Nest voneinander getrennt, d. h. in dieser Drehwinkelstellung der Vorrichtung fährt das von der Kurvenbahn 44 gesteuerte Nest 48 in den bereits zurückgezogenen Heizkörper zurück (Fig. 3/4), wobei anschließend (ab etwa 210°) Nest und Heizkörper gemeinsam nach vorne in Richtung auf den Werkstückträger fahren, um die für den neuen Bearbeitungszyklus erforderliche vordere Ausgangslage einzunehmen (Fig. 3/5 bzw. Fig. 3/1).

Ein Beheizen der Formwerkzeuge durch den Heizkörper erfolgt also etwa ab dem unteren Totpunkt bis etwa 90° nach dem oberen Totpunkt, also über insgesamt etwa drei Vierteil der Drehbewegung, und bei etwa 90° wird der Heizkörper vom Formwerkzeug nach hinten weggefahren, um dem Kühlwasser Zutritt zum Nest zu verschaffen, welches im Drehwinkelbereich von etwa 90° bis 180° auf das Nest einwirkt.

Der oben anhand einer Bearbeitungsstation dargestellte grundsätzliche Bearbeitungszyklus eines Werkstückes läuft kontinuierlich und jeweils leicht phasenverschoben an sämtlichen Bearbeitungsstationen gleichzeitig ab, wobei die Zahl der vorhandenen Bearbeitungsstationen nur von den Abmessungen der Vorrichtung bestimmt wird. Ein konkretes Ausführungsbeispiel dieser Vorrichtung hat beispielsweise 16 Bearbeitungsstationen, wobei die Bearbeitungsgeschwindigkeit der Vorrichtung etwa 2 U/min beträgt.

In den Zeichnungen ist angedeutet, daß der Heizkörper 50 elektrisch beheizt ist. Dies ist jedoch nur eine Möglichkeit zur Erzeugung der notwendigen Schmelzwärme im Rohrabschnitt aus thermoplastischem Kunststoff. Andere Arten der Erwärmung sind ohne weiteres denkbar. So ist es u. a. denkbar, den Kunststoff unmittelbar unter Anwendung von Ultraschall zu erwärmen, wie dies im Stand der Technik bekannt ist.

Wie weiter aus Figur 4 hervorgeht, sind die Schubstangen 36 und 38 — aber auch 20 — mit einer Fläche 62 versehen, so daß die auf den Kurvenbahnen 28, 42 und 44 (Fig. 1) lastenden Rollen 24 der Schubstangen während der Drehbewegung der Welle 4 und damit aller Werkzeuge stets tangential zur Kurvenbahn gerichtet sind.

In der rechten Hälfte der Figur 1 sind nicht alle inneren und äußeren Schubstangen gezeigt ; die übrigen Schubstangen sind der Übersichtlichkeit wegen fortgelassen.

## Patentansprüche

1. Vorrichtung zum Formen eines Endes von aus thermoplastischem Kunststoff gebildeten Röhrchen (14), mittels in die Röhrchen einführbarer Kerne (30) bzw. Dorne und über die erwärmten Enden der Röhrchen setzbarer Formen unter Verwendung eines drehbaren Werkstückträgers (10), der mit einer in Seitenteilen gelagerten Welle (4) verbunden ist, und parallel zur Welle verschiebbare Heiz- und Formvorrichtungen (40) besitzt, wobei der Werkstückträger an seinem Umfang Ausnehmungen (12) zur Aufnahme der Werkstücke aufweist, gekennzeichnet durch die Kombination der Merkmale,

a) daß die den Werkstückträger (10) aufnehmende Welle (4) kontinuierlich umläuft, und

b) einerseits vom Werkstückträger (10) mit diesem umlaufende, parallel zu seiner Drehachse verschiebbare, in die Röhrchen (14) eingreifende Kerne (30), sowie

c) andererseits vom Werkstückträger (10) mit diesem umlaufende, parallel zu seiner Drehachse verschiebbare, jeweils mit einer Heizung (60) verbindbare Formwerkzeuge (48) angeordnet sind.

2. Vorrichtung nach Anspruch 1, dadurch gekennzeichnet, daß die Dorne bzw. Kerne (30) und die Formwerkzeuge (48) mit axial beweglichen Schubstangen (20, 38) verbunden sind, die von Kurvenbahnen (28, 44) steuerbar sind.

3. Vorrichtung nach Anspruch 1, dadurch gekennzeichnet, daß die Heizvorrichtungen (50) mittels axial beweglichen Schubstangen (36) verbunden sind, die von einer Kurvenbahn (42) steuerbar sind.

4. Vorrichtung nach Anspruch 1, dadurch gekennzeichnet, daß die Heizkörper (50) und die Formwerkzeuge (48) mittels der Schubstangen (36, 38) zusammenfügbar und trennbar sind.

5. Vorrichtung nach Ansprüchen 1 bis 3, dadurch gekennzeichnet, daß die Schubstangen (20, 36, 38) in mit der Welle (4) verbundenen Scheiben (16, 18, 32, 34) gleitbeweglich geführt sind.

6. Vorrichtung nach Ansprüchen 1 und 3, dadurch gekennzeichnet, daß die den Heizkörpern (50) zugeordneten Schubstangen (36) in einem anderen radialen Abstand von der Drehachse der Welle (4) in den Scheiben (32, 34) gehalten und geführt sind, als die Schubstangen (38) der Formwerkzeuge (48).

7. Vorrichtung nach Ansprüchen 2 und 3, dadurch gekennzeichnet, daß die Kurvenbahnen (28, 42, 44) an den Seitenteilen (26) befestigt sind.

## Claims

1. A device for forming one end of tubes (14) formed of synthetic thermoplastic material by means of cores (30) or mandrels insertable in the tubes and dies which may be placed over the heated ends of the tubes with the use of a rotatable workpiece carrier (10), which is connected with a shaft (4) supported in side members and comprises heating and forming devices (48) displaceable parallel to the shaft, the workpiece carrier comprising recesses (12) in its circumference for receiving the workpieces, characterized by the combination of the features

a) that the shaft (4) receiving the workpiece carrier (10) rotates continuously, and

b) that cores (30) engaging in the tubes (14) are arranged on one side of the workpiece carrier (10) to rotate therewith and be displaceable parallel to its axis of rotation, and

c) that forming dies (48) each connectable with a heating device (60) are arranged on the other side of the workpiece carrier (10) to rotate therewith and be displaceable parallel to its axis of rotation.

2. A device according to claim 1, characterized in that the mandrels or cores (30) and the forming dies (48) are connected with axially movable push rods (20, 38), which are controllable by curved tracks (28, 44).

3. A device according to claim 1, characterized in that the heating devices (50) are connected by means of axially movable push rods (36), which are controllable by means of a curved track (42).

4. A device according to claim 1, characterized in that the heating devices (50) and the forming dies (48) may be joined together and separated by means of the push rods (36, 38).

5. A device according to any one of claims 1 to 3, characterized in that the push rods (20, 36, 38) are guided slidingly in disks (16, 18, 32, 34) connected with the shaft (4).

6. A device according to claims 1 and 3, characterized in that the push rods (36) associated with the heating devices (50) are held and guided in the disks (32, 34) at a different radial distance from the axis of rotation of the shaft (4) from the push rods (38) of the forming dies (48).

7. A device according to claims 2 and 3, characterized in that the curved tracks (28, 42, 44) are secured to the side members (26).

**Revendications**

1. Dispositif pour le formage de l'une des extrémités de petits tubes (14) formés de matière thermoplastique, au moyen de noyaux (30) ou mandrins capables de pénétrer dans les tubes et de moules plaçables sur les extrémités chauffées des tubes, et par l'utilisation d'un porte-pièces rotatif (10) qui est relié à un arbre (4) supporté dans des pièces latérales et qui comporte des dispositifs de chauffage et de formage (48) déplaçables parallèlement à l'arbre, le porte-pièces présentant sur son pourtour des évidements (12) destinés à recevoir les pièces à usiner, caractérisé par la combinaison des particularités selon laquelle

a) l'arbre (4) recevant le porte-pièces (10) tourne en continu, et

b) des noyaux (30) tournant avec le porte-pièces (10), déplaçables parallèlement à son axe de rotation et pénétrant dans les tubes (14), sont agencés d'un côté du porte-pièces (10), ainsi que

c) des outils de formage (48) tournant avec le porte-pièces (10), déplaçables parallèlement à son axe de rotation et respectivement reliables à un chauffage (60), sont agencés de l'autre côté du porte-pièces (10).

2. Dispositif suivant la revendication 1, caractérisé en ce que les mandrins ou noyaux (30) et les outils de formage (48) sont reliés à des tiges de poussée (20, 38) déplaçables axialement qui peuvent être commandées par des parcours de came (28, 44).

3. Dispositif suivant la revendication 1, caractérisé en ce que les dispositifs de chauffage (50) sont reliés au moyen de tiges de poussée (36) déplaçables axialement qui peuvent être commandées par un parcours de came (42).

4. Dispositif suivant la revendication 1, caractérisé en ce que les corps chauffants (50) et les outils de formage (48) peuvent être réunis et séparés au moyen des tiges de poussée (36, 38).

5. Dispositif suivant l'une des revendications 1 à 3, caractérisé en ce que les tiges de poussée (20, 36, 38) sont guidées de manière à pouvoir coulisser dans des disques (16, 18, 32, 34) reliés à l'arbre (4).

6. Dispositif suivant l'une des revendications 1 et 3, caractérisé en ce que les tiges de poussée (36) adjointes aux corps chauffants (50) sont maintenues et guidées dans les disques (32, 34) à une autre distance radiale de l'axe de rotation de l'arbre (4) que les tiges de poussée (38) des outils de formage (48).

7. Dispositif suivant l'une des revendications 2 et 3, caractérisé en ce que les parcours de came (28, 42, 44) sont fixés sur les pièces latérales (26).

Fig. 1

0 158 341

**Fig. 2**

**Fig. 4**

**Fig. 5**

Vorschub des Kerns

Werkstück Zufuhr

Einschieben des Werkstückes in die Form

Heizen des Werkstückes

Heizen des Nestes

Kühlen des Nestes

Freigabe des Werstückes

ab hier

2

Fig. 3/1

Fig. 3/2

Fig. 3/3

Fig. 3/4

Fig. 3/5

Fig. 3